# EUROPEAN PATENT APPLICATION

(11) **EP 4 173 807 A1**
(43) Date of publication of application: **03.05.2023**
(21) Application number: 22200549.8
(22) Date of filing: 10.10.2022
(51) Int. Cl.: B29C 65/36, B29C 65/18, B29C 65/32, B65B 13/32, B29K 101/12

(54) **AUTOMATED CABLE INSTALLATION TOOL WITH INDUCTION WELDING JOINING MECHANISM**

(30) Priority: 22.10.2021 US 202117508917
(71) Applicant: ABB SCHWEIZ AG, 5400 Baden (CH)
(72) Inventor: ARMSTRONG, Daniel Pierce, Raleigh, North Carolina 27502 (US); KADOKO, Jonah, Raleigh, North Carolina 27502 (US); HETRICH, Matthew, Raleigh, North Carolina 27502 (US); ZHONG, Sheng, Raleigh, North Carolina 27502 (US)
(74) Representative: Maiwald GmbH

(57) **Abstract**

A system (100) includes a body having a pair of cable jaws (120). The pair of cable jaws (120) further includes a dispensing track on an inner circumference of the pair of cable jaws (120) to retain a segment of a thermoplastic cable material (115). The system (100) includes a piston (145). The piston (145) is configured to secure an overlapping segment of the thermoplastic cable material (115) at the weld area. An induction coil (125) is configured to apply an electromagnetic field. The system (100) includes a power supply (160).

## Description

### FIELD

This disclosure relates generally to cable bundling. More particularly, this disclosure relates to a device for automatically dispensing, tensioning, and joining cable bundling material around a set of elongate members (e.g., wires, cables, etc.).

### BACKGROUND

Automated cable material installation has become industrially relevant for high volume cable material customers, particularly in automotive, aerospace, aviation, and data center spaces. Some automated cable material installation tools utilize cable materials with a ratchet head that imposes a sharp edge hazard and produces a large amount of waste. Other automated cable material installation tools utilize ultrasonic welding wherein the weld quality is difficult to control due to rapid vibration and high clamping forces being required. Therefore, improved automated cable material installation tools are desirable.

### SUMMARY

In some embodiments, a system includes a body having: a pair of cable jaws, wherein the pair of cable jaws further includes a dispensing track on an inner circumference of the pair of cable jaws to retain a segment of a thermoplastic cable material; a piston, the piston configured to secure an overlapping segment of the thermoplastic cable material at the weld area; and an induction coil to apply an electromagnetic field; and a power supply.

In some embodiments, the system further includes a tensioning motor and a tensioning track, the tensioning motor and tensioning track configured to tighten the segment of thermoplastic cable material around an at least one elongate member being bundled, and wherein the length of thermoplastic cable material is fed through the dispensing track of the pair of cable jaws around the at least one elongate member until an end of the thermoplastic cable material overlaps an intermediate segment of the thermoplastic cable material at a weld area, the tensioning motor tightens the thermoplastic cable material around the at least one elongate member being bundled, and the overlapping segments of the thermoplastic cable material are bonded by the electromagnetic field of the induction coil.

In some embodiments, the body further includes a metallic or ferromagnetic insert sensitive to the electromagnetic field positioned at the weld area.

In some embodiments, the insert is a clamp, the clamp being configured to the overlapping segment of the thermoplastic cable material in place and heated by the induction coil to bond the overlapping segment of thermoplastic cable material.

In some embodiments, the insert is a staple, and wherein the staple is accelerated through the overlapping segments of the thermoplastic cable material and heated by the induction coil to bond overlapping segment of thermoplastic cable material.

In some embodiments, the insert is positioned at the overlapping segments of the thermoplastic cable material at the weld area, between a first segment and a second segment of the thermoplastic cable material.

In some embodiments, the insert is a mesh, and wherein the mesh is disposed between the first segment and second segment of thermoplastic cable material and heated by the induction coil to bond the first segment of thermoplastic cable material to the second segment of thermoplastic cable material.

In some embodiments, the insert is a foil sheet, the foil sheet is disposed between the first segment and the second segment of thermoplastic cable material and heated by the induction coil to bond the first segment of thermoplastic cable material to the second segment of thermoplastic cable material.

In some embodiments, the thermoplastic cable material further includes a metallic or ferromagnetic layer disposed between adjacent layers of thermoplastic cable material and wherein overlapping segments of the thermoplastic cable material is configured to bond when a magnetic field frequency is applied from the induction coil to the weld area.

In some embodiments, the body further includes: a retaining member to retain a length of the cable material, the retaining member configured to yield a length of cable material based on a drawing force; a receptacle to retain the retaining member; a dispensing mechanism, the dispensing mechanism disposed at the receptacle and configured to dispense a determined length of cable material around the set of elongate members being bundled; and wherein the dispensing system is removably connected to the body of the cable material induction welding system.

In some embodiments, the retaining member is rotatably connected to the receptacle of the body.

In some embodiments, the power supply operates at a frequency of 10 kHz to 10 MHz.

In some embodiments, the induction coil is a hair-pin induction coil, a stacked spiral wire coil, or a spiral-cut sheet coil.

In some embodiments, the body further includes an electromagnetically non-conductive shield to insulate the elongate members being bundled from the induction coil.

In some embodiments, a method for using a system including the steps of: dispensing a segment of a thermoplastic cable material through a pair of cable jaws along a dispensing track of a pair of cable jaws until a first segment of a thermoplastic cable material overlaps a second segment of the thermoplastic cable material at an area by a piston, the piston being formed by an induction coil; tensioning the thermoplastic cable material to tighten the thermoplastic cable material around at least one elongate member being bundled; applying the piston onto the overlapping first segment and the second segment of the thermoplastic cable material to apply pressure to the first segment and the second segment of the thermoplastic cable material; generating an electromagnetic field with a power supply; and applying the electromagnetic field through the induction coil to bond the first segment of the thermoplastic cable material to the second segment of the thermoplastic cable material.

In some embodiments, wherein dispensing a segment of the thermoplastic cable material further includes: positioning an insert between the first and second segments of the thermoplastic cable material.

In some embodiments, wherein dispensing a segment of the thermoplastic cable material further includes: positioning an insert around the overlapping first segment and the second segment of the thermoplastic cable material.

In some embodiments, a cable material welding tool includes: a pair of cable jaws; an induction coil; a length of cable material; and a power supply that operates between 10 kHz and 10 MHz.

In some embodiments, the cable material welding tool further includes: a piston; a tensioning motor and a tensioning track; and an electrically non-conductive shield.

In some embodiments, the cable material further includes a metallic or ferromagnetic layer disposed between adjacent layers of thermoplastic and wherein an overlapping segment of the cable material is configured to bond together when heat is applied from the induction coil.

In some embodiments, the induction coil is a pin-hair coil, a spiral wire coil, a stacked spiral wire coil, or a spiral-cut sheet coil.

In some embodiments, the cable material welding tool further includes a shield to insulate at least one elongate member being bundled from an electromagnetic field generated by the induction coil.

In some embodiments, the cable material tool further includes an insert, the insert being composed of a material sensitive to an electromagnetic field and disposed at a weld area to bond overlapping segments of cable material.

In some embodiments, the insert is a staple, mesh, clamp, or a foil sheet.

### BRIEF DESCRIPTION OF THE DRAWINGS

References are made to the accompanying drawings that form a part of this disclosure and that illustrate embodiments in which the systems and methods described in this Specification can be practiced.
FIG. 1 is a schematic view of a system including an automated cable material installation tool, according to some embodiments.
FIG. 2 is a perspective view of a system including an automated cable material installation tool, according to some embodiments.
FIG. 3 is a perspective view of cable materials laminated with metallic strip during production, according to some embodiments.
FIG. 4 is a perspective view of a pancake induction coil inside a piston, according to some embodiments.
FIG. 5 is a perspective view of a pancake induction coil applied to a cable material, according to some embodiments.
FIG. 6 is a perspective view of a hairpin induction coil applied to a cable material, according to some embodiments.

Like reference numbers represent the same or similar parts throughout.

### DETAILED DESCRIPTION

Embodiments of this disclosure are directed to an automated cable material installation tool. More specifically, the automated cable material installation tool described in this disclosure is a device for joining segments of thermoplastic cable material together. The device includes a pair of cable jaws with a dispensing track, tensioning motor and tensioning track, a piston and anvil to apply pressure to the weld, an induction coil, and a power supply. In some embodiments, the device includes an insert that is heated by the induction coil to weld the cable material together.

An "automated cable material installation system" as used herein, includes a system or tool capable of wrapping at least one elongate member with a thermoplastic cable material, tightening the thermoplastic cable material around the at least one elongate member being bundled, and welding overlapping segments of the thermoplastic cable material together using an induction coil. In some embodiments, the automated cable material installation system may include an insert positioned adjacent to the overlapping segments of the thermoplastic cable material at the weld area to bond the overlapping segments of the thermoplastic cable material. In some embodiments, the automated cable material installation system includes a cable material dispensing system that holds a length of thermoplastic cable material and provides the thermoplastic cable material that is bundled around the elongate members and welded together.

A "cable material" as used herein, includes a length of thermoplastic material suitable for being bundled around a set of elongate members. In some embodiments, the cable material may be one continuous length of thermoplastic material. In some embodiments, the cable material may be a predetermined length dispensed by the automated cable material installation system.

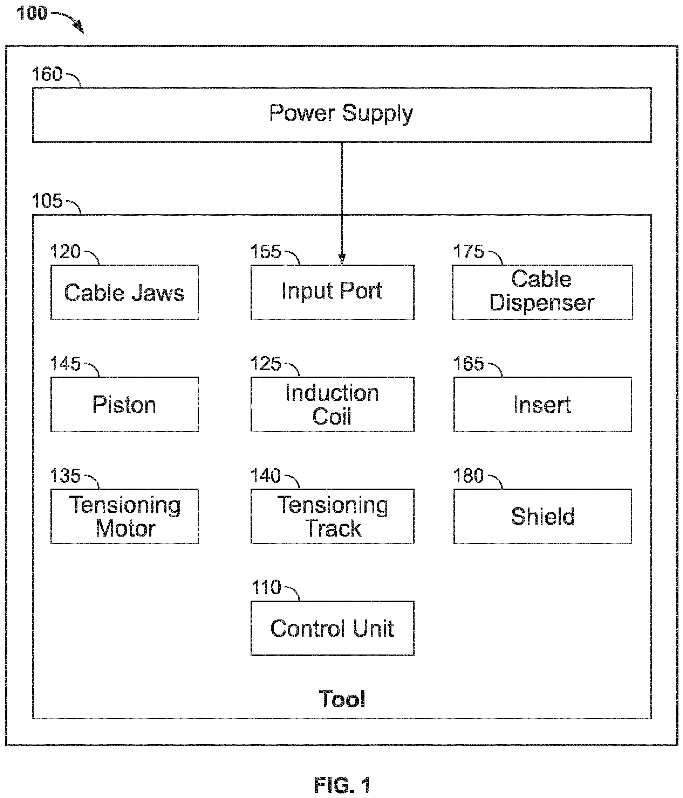

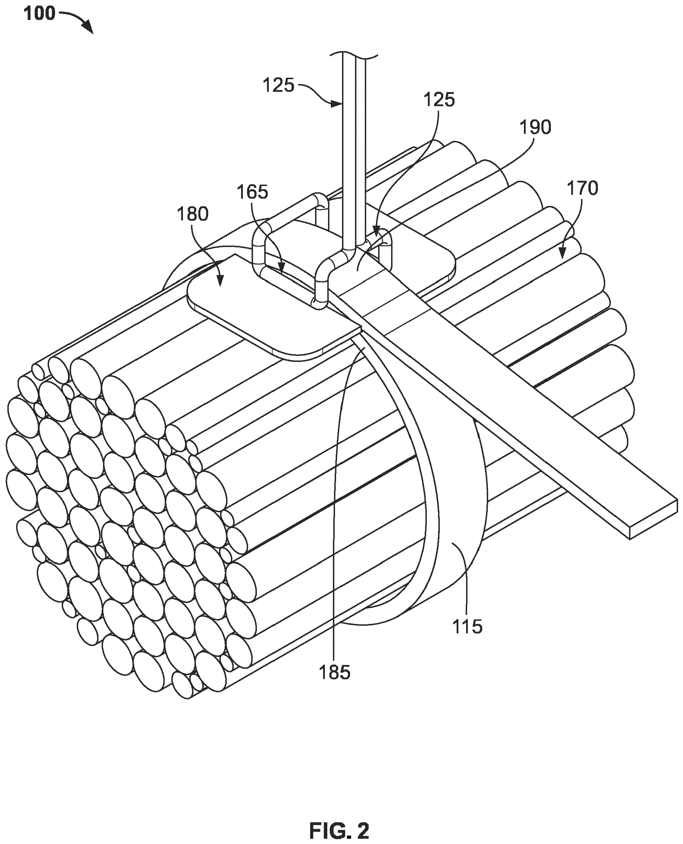

FIG. 1 is a schematic view of a system 100 including an automated cable material installation tool, according to some embodiments. FIG. 2 is a perspective view of the system 100 including an automated cable material installation tool, according to some embodiments. FIGS. 1-2 will be referred to collectively, unless expressly noted otherwise. The automated cable material installation system 100 is generally configured for bundling a set of elongate members 170 using a cable material 115.

In some embodiments, the automated cable material installation system 100 includes a tool 105. The tool 105 includes a control unit 110. The control unit 110 can control one or more settings related to the operation of the automated cable material installation system 100, according to some embodiments. The tool 105 can include a body having a pair of cable jaws 120, an induction coil 125, a tensioning motor 135 and tensioning track 140, a piston 145, and an input port 155. The automated cable material installation system 100 can also include a power supply 160 connected to the tool 105 at the input port 155.

In some embodiments, the pair of cable jaws 120 may have a dispensing track on the inner circumference of the pair of cable jaws 120. The dispensing track can retain a length of cable material 115 that is fed through the automated cable material installation system 100 around the elongate members 170 being bundled. The tensioning motor 135 and the tensioning track 140 apply tension to the cable material 115 after the cable material 115 is fed around a set of elongate members 170 being bundled, thereby securing the cable material 115 around the set of elongate members 170. The piston 145 can be disposed near the weld area. The piston 145 can be configured to apply a pressure to the weld area at overlapping segments of the cable material 115.

In some embodiments, the induction coil 125 can generate an electromagnetic field capable of heating metallic or ferromagnetic materials. The electromagnetic field generated by the induction coil 125 can be applied to metallic or ferromagnetic materials and a field frequency from the power supply can be provided to the induction coil 125. In some embodiments, the induction coil 125 may be made from copper wire capable of carrying a current required for induction. In other embodiments, the induction coil 125 may be made from other suitable material that may be capable of carrying a current required for induction.

In some embodiments, a current carried by the induction coil 125 can be less than 10 amps. In some embodiments, the current carried by the induction coil 125 can be less than 9 amps. In some embodiments, the current carried by the induction coil 125 can be less than 8 amps. In some embodiments, the current carried by the induction coil 125 can be less than 7 amps. In some embodiments, the current carried by the induction coil 125 can be less than 6 amps. In some embodiments, the current carried by the induction coil 125 can be less than 5 amps. In some embodiments, the current carried by the induction coil 125 can be less than 4 amps. In some embodiments, the current carried by the induction coil 125 can be less than 3 amps. In some embodiments, the current carried by the induction coil 125 can be less than 2 amps.

In some embodiments, the current carried by the induction coil 125 can be greater than 1 amp. In some embodiments, the current carried by the induction coil 125 can be greater than 2 amps. In some embodiments, the current carried by the induction coil 125 can be greater than 3 amps. In some embodiments, the current carried by the induction coil 125 can be greater than 4 amps. In some embodiments, the current carried by the induction coil 125 can be greater than 5 amps. In some embodiments, the current carried by the induction coil 125 can be greater than 6 amps. In some embodiments, the current carried by the induction coil 125 can be greater than 7 amps. In some embodiments, the current carried by the induction coil 125 can be greater than 8 amps. In some embodiments, the current carried by the induction coil 125 can be greater than 9 amps.

In some embodiments, the power supply 160 generates a frequency for the induction coil 125 of the automated cable material installation system 100. In some embodiments, the power supply 160 can be a high frequency power supply that generates a frequency of 10 kHz to 10 MHz.

In some embodiments, the power supply 160 can be a high frequency power supply that generates a frequency of 100 kHz to 10 MHz. In some embodiments, the power supply 160 can be a high frequency power supply that generates a frequency of 200 kHz to 10 MHz. In some embodiments, the power supply 160 can be a high frequency power supply that generates a frequency of 300 kHz to 10 MHz. In some embodiments, the power supply 160 can be a high frequency power supply that generates a frequency of 400 kHz to 10 MHz. In some embodiments, the power supply 160 can be a high frequency power supply that generates a frequency of 500 kHz to 10 MHz. In some embodiments, the power supply 160 can be a high frequency power supply that generates a frequency of 600 kHz to 10 MHz. In some embodiments, the power supply 160 can be a high frequency power supply that generates a frequency of 700 kHz to 10 MHz. In some embodiments, the power supply 160 can be a high frequency power supply that generates a frequency of 800 kHz to 10 MHz. In some embodiments, the power supply 160 can be a high frequency power supply that generates a frequency of 900 kHz to 10 MHz. In some embodiments, the power supply 160 can be a high frequency power supply that generates a frequency of 1 MHz to 10 MHz. In some embodiments, the power supply 160 can be a high frequency power supply that generates a frequency of 2 MHz to 10 MHz. In some embodiments, the power supply 160 can be a high frequency power supply that generates a frequency of 3 MHz to 10 MHz. In some embodiments, the power supply 160 can be a high frequency power supply that generates a frequency of 4 MHz to 10 MHz. In some embodiments, the power supply 160 can be a high frequency power supply that generates a frequency of 5 MHz to 10 MHz. In some embodiments, the power supply 160 can be a high frequency power supply that generates a frequency of 6 MHz to 10 MHz. In some embodiments, the power supply 160 can be a high frequency power supply that generates a frequency of 7 MHz to 10 MHz. In some embodiments, the power supply 160 can be a high frequency power supply that generates a frequency of 8 MHz to 10 MHz. In some embodiments, the power supply 160 can be a high frequency power supply that generates a frequency of 9 MHz to 10 MHz.

In some embodiments, the power supply 160 can be a high frequency power supply that generates a frequency of 10 kHz to 9 MHz. In some embodiments, the power supply 160 can be a high frequency power supply that generates a frequency of 10 kHz to 8 MHz. In some embodiments, the power supply 160 can be a high frequency power supply that generates a frequency of 10 kHz to 7 MHz. In some embodiments, the power supply 160 can be a high frequency power supply that generates a frequency of 10 kHz to 6 MHz. In some embodiments, the power supply 160 can be a high frequency power supply that generates a frequency of 10 kHz to 5 MHz. In some embodiments, the power supply 160 can be a high frequency power supply that generates a frequency of 10 kHz to 4 MHz. In some embodiments, the power supply 160 can be a high frequency power supply that generates a frequency of 10 kHz to 3 MHz. In some embodiments, the power supply 160 can be a high frequency power supply that generates a frequency of 10 kHz to 2 MHz. In some embodiments, the power supply 160 can be a high frequency power supply that generates a frequency of 10 kHz to 1 MHz. In some embodiments, the power supply 160 can be a high frequency power supply that generates a frequency of 10 kHz to 900 kHz. In some embodiments, the power supply 160 can be a high frequency power supply that generates a frequency of 10 kHz to 800 kHz. In some embodiments, the power supply 160 can be a high frequency power supply that generates a frequency of 10 kHz to 700 kHz. In some embodiments, the power supply 160 can be a high frequency power supply that generates a frequency of 10 kHz to 600 kHz. In some embodiments, the power supply 160 can be a high frequency power supply that generates a frequency of 10 kHz to 500 kHz. In some embodiments, the power supply 160 can be a high frequency power supply that generates a frequency of 10 kHz to 400 kHz. In some embodiments, the power supply 160 can be a high frequency power supply that generates a frequency of 10 kHz to 300 kHz. In some embodiments, the power supply 160 can be a high frequency power supply that generates a frequency of 10 kHz to 200 kHz. In some embodiments, the power supply 160 can be a high frequency power supply that generates a frequency of 10 kHz to 100 kHz.

In some embodiments, the power supply 160 is cable of generating a suitable driving signal for induction circuits. Examples of suitable driving signals include, but are not limited to, saw-tooth, square wave, half wave signals. These relatively simple driving signals are advantageous compared to other high frequency technologies such as ultrasonic welders that require a well-controlled driving signal and intensive feedback control features.

In some embodiments, the coil design of the induction coil 125 can possess a geometry suitable for the dimensions of the cable material 115. Generally, cable material 115 widths range from 0.09-0.32 inches. In some embodiments, the automated cable material installation system 100 can be adapted to operate with a cable material 115 having a width greater than 0.32 inches. In some embodiments, a corresponding diameter of the induction coil 125 can range from 0.09-0.32 inches. In some embodiments, the coil diameter or width can be smaller than the size of the cable material 115 to be welded.

In some embodiments, the diameter of the induction coil 125 can range from 0.09-0.3 inches. In some embodiments, the diameter of the induction coil 125 can range from 0.09-0.25 inches. In some embodiments, the diameter of the induction coil 125 can range from 0.09-0.2 inches. In some embodiments, the diameter of the induction coil 125 can range from 0.09-0.15 inches. In some embodiments, the diameter of the induction coil 125 can range from 0.09-0.1 inches.

In some embodiments, the diameter of the induction coil 125 can range from 0.1-0.32 inches. In some embodiments, the diameter of the induction coil 125 can range from 0.15-0.32 inches. In some embodiments, the diameter of the induction coil 125 can range from 0.2-0.32 inches. In some embodiments, the diameter of the induction coil 125 can range from 0.25-0.32 inches. In some embodiments, the diameter of the induction coil 125 can range from 0.1-0.32 inches.

In some embodiments, the automated cable material installation system 100 includes an insert 165 positioned at the weld area. In some embodiments, the insert 165 is composed of a metallic or ferromagnetic material including, but not limited to, iron, copper, aluminum, nickel, cobalt, carbon steel, stainless steel, graphite/graphene/carbon fiber/carbon nanotube/other conductive carbon species, combinations thereof, or the like.

In some embodiments, the insert 165 may comprise a staple that is accelerated through overlapping segments of the cable material 115. The staple is designed with prongs that may be accelerated through the overlapping segments of the cable material 115 to hold them in place under tension. The heating of the staple melts the adjacent overlapping segments of the cable material 115 to form a bond. In some embodiments, the prongs of the staple heat faster than the flat region of the staple when heated with the induction coil 125. In some embodiments, the insert 165 can be a mesh of wires. The mesh size can be appropriate for the applied magnetic field frequency so as not to be reflective. When the mesh can be heated by the induction coil 125, the mesh heats the cable material 115 and the molten cable material 115 material flows between, and fills, the gaps in the mesh to encapsulate the insert 165 to form a homogenous weld. In some embodiments, the insert 165 can be a clamp. The clamp can be configured to hold the overlapping segments of the cable material 115 together. The heating of the clamp by the induction coil 125 melts the overlapping segments of the cable material 115 layers to form a bond. In some embodiments, the insert 165 can be a foil positioned between the overlapping segments of the cable material 115. The heating of the foil by the induction coil 125 melts that overlapping segments of the cable material 115 to form a bond.

In some embodiments, the insert 165 may be pressed into the cable material 115 just before induction welding by the induction coil 125. The gripping force applied to the leading end of the cable material 115, during the tensioning of the cable material 115 by the tensioning motor 135 and the tensioning track 140 may also be utilized to mechanically press the insert 165 into the cable material 115.

In some embodiments, the automated cable material installation system 100 includes a dispensing system for the cable material 115. The cable material 115 may be composed of various thermoplastics including, but not limited to, Nylon 4,6; Nylon 6,6; Nylon 11; Nylon 12; thermoplastic polyurethane; polyoxymethylene (Acetal); polypropylene; polyethylene and high-density polyethylene; fluoropolymer (e.g., Polytetrafluoroethylene (PTFE), Ethylene tetrafluoroethylene (ETFE)); and polyether ether ketone (PEEK), combinations thereof, or the like. In some embodiments, these thermoplastic materials may be combined with metallic compounds either during the production of the ties or combined with the insert 165 in the welding and tensioning process as described above to bond the cable material 115 when bundling the elongate members 170.

In some embodiments, the automated cable material installation system 100 includes a shield 180. The shield 180 may be composed of an electromagnetically non-conductive material resistant to the electromagnetic field of the induction coil 125, and the heat generated by the induction coil 125 being applied to either the cable material 115 or the insert 165. The shield insulates the elongate members 170 being bundled from the electromagnetic field of the induction coil 125 and the heat generated by the induction coil 125 being applied to the elongate members 170.

In some embodiments, the weld area can be disposed at the piston 145. At the weld area, the cable material 115 can be fed through the automated cable material installation system 100 until a first segment 185 of the cable material 115 can be positioned adjacent to and above a second segment 190 of the cable material 115.

In some embodiments, the automated cable material installation system 100 also includes a cable dispenser 175 for retaining a length of cable material 115 configured to be inserted into the tool 105 of the automated cable material installation system 100. In some embodiments, the tool 105 can include the cable dispenser 175 for receiving a length of cable material, such as on a spool. The spool can be rotatably connected to the tool 105 so that a determined, or predetermined, length of cable material 115 can be dispensed based on a drawing force created by the automated cable material installation system 100 or a user of the automated cable material installation system 100.

In some embodiments, a method for using an automated cable material installation system 100 includes dispensing a segment of cable material 115 through the dispensing track of the pair of cable jaws 120 until a first segment 185 of the cable material 115 overlaps a second segment 190 of the cable material 115 at an area at the piston 145. The automated cable material installation system 100 applies a tension to the cable material 115 to tighten the cable material 115 around at least one elongate member 170 being bundled. The piston 145 can be positioned at the weld area to apply a pressure to the overlapping segments of the cable material 115 at the weld area. An electromagnetic field frequency can be generated with a power supply 160 and the resulting electromagnetic field can be applied to the weld area through an induction coil 125 to bond the first segment 185 of the cable material 115 to the second segment 190 of the cable material 115.

In some embodiments of the method for using the automated cable material installation system 100, dispensing a segment of cable material 115 further comprises positioning an insert 165 between the cable material 115 and the elongate members 170. In some embodiments of the method for using the automated cable material installation system 100, dispensing a segment of cable material 115 further comprises positioning an insert 165 around the overlapping first segment 185 and the second segment 190 of the cable material 115.

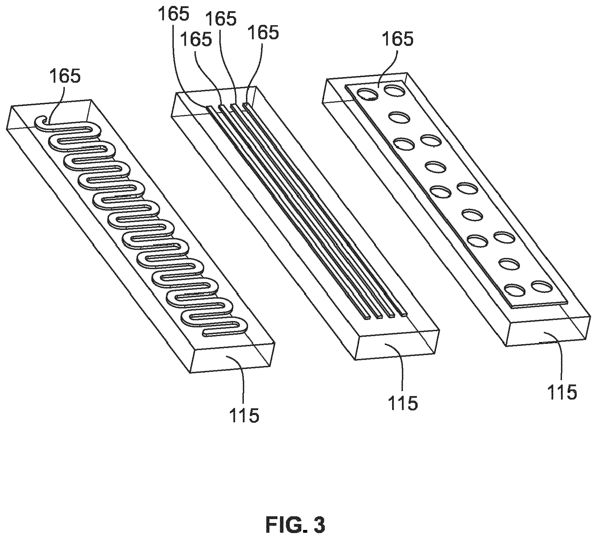

FIG. 3 is a perspective view of cable materials laminated with metallic strip during production, according to some embodiments. In some embodiments, the cable material 115 may be laminated with a metallic or ferromagnetic strip during production of the cable material 115. The insert 165 and cable material 115 are joined together in production using an extrusion method coupled to lamination method. The structure of the resulting lamination of the cable material 115 allows the cable material 115 contact area to form a weld when heat is applied by the induction coil 125. This structure can be accomplished by multiple parallel thin strips, perforated films, or a winding path of metallic or ferromagnetic material disposed between adjacent layers of thermoplastic. The lamination can include discreet films rather than continuous strips, or continuous strips with periodic electrical insulation.

In some embodiments, the cable material 115 may be laminated or coextruded with metallic or magnetic particle filled thermoplastic composites. Examples include iron particle/filings in a thermoplastic matrix. The particle size in the thermoplastic composite can be sufficiently large to be responsive to magnetic fields of the applied frequency but can be constrained by strap geometry. One example of such a constraint can be a particle size of less than 1 mm in diameter for spheres, fibers, and needles, and less than 1 mm in thickness for flakes or particles of irregular shape.

In some embodiments, the cable material 115 may be laminated or coextruded with a metallic or magnetic material such as graphite, graphene, carbon fiber, carbon nanotube, other conductive carbon species, including iron, copper, aluminum, nickel, cobalt, and their compounds.

In some embodiments, the cable material 115 may further comprise a deposition layer of aluminum or other metallic coating including copper, ferrite, nickel, cobalt, and their compounds or other suitable materials. The cable material 115 are extruded and then coated with the metallic or magnetic material. The coating can be applied selectively to the cable material 115 with a stenciling or templating process using one of the following techniques, or other applicable techniques: chemical vapor deposition, physical vapor deposition, sputtering, electroplating, electroless plating, arc spraying, powder coating, and flame spraying.

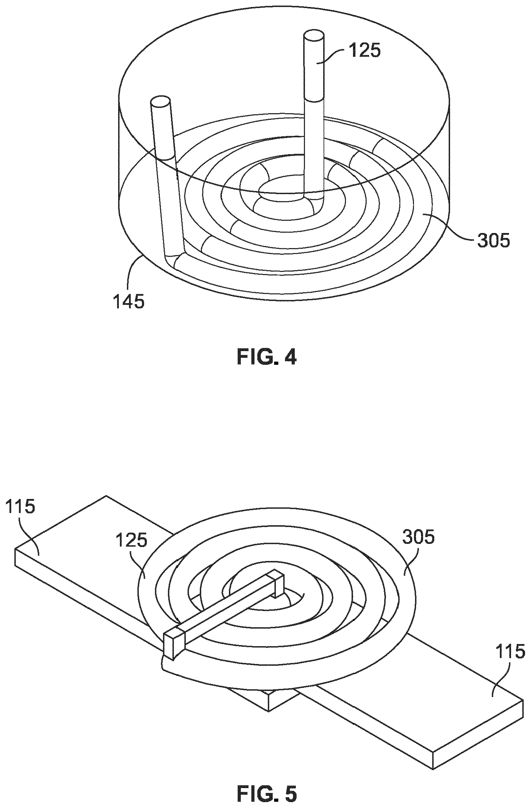

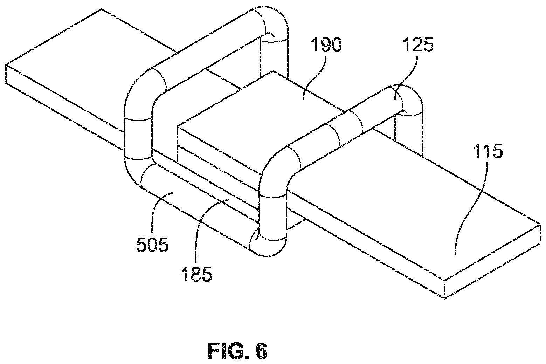

FIGS. 4-6 show different embodiments of the induction coil 125 of FIG. 1. FIG. 4 is a perspective view of a pancake induction coil inside a piston, according to some embodiments. FIG. 5 is a perspective view of a pancake induction coil applied to a cable material, according to some embodiments. FIG. 6 is a perspective view of a hairpin induction coil applied to a cable material, according to some embodiments.

In some embodiments, the induction coil 125 may be a pancake coil 305, a stacked spiral wire coil, a spiral-cut sheet coil, a hair-pin coil 505, a single turn coil, or a solenoid coil around the weld area. In some embodiments, the induction coil 125, or a portion thereof, can be embedded in the piston 145, wherein the piston 145 is composed of a field shaping material that controls magnetic field focusing onto the weld area. In some embodiments, the leads of the coil pass through the piston and are minimally inductive. In other embodiments, the induction coil 125 is configured in a complex coil pattern to surround the cable material 115 at the weld area.

The terminology used herein is intended to describe embodiments and is not intended to be limiting. The terms "a," "an," and "the" include the plural forms as well, unless clearly indicated otherwise. The terms "comprises" and/or "comprising," when used in this Specification, specify the presence of the stated features, integers, steps, operations, elements, and/or components, but do not preclude the presence or addition of one or more other features, integers, steps, operations, elements, and/or components.

It is to be understood that changes may be made in detail, especially in matters of the construction materials employed and the shape, size, and arrangement of parts without departing from the scope of the present disclosure. This Specification and the embodiments described are examples, with the true scope and spirit of the disclosure being indicated by the claims that follow.

## Claims

1. A system, comprising:
a body having:
a pair of cable jaws, wherein the pair of cable jaws comprises a dispensing track on an inner circumference of the pair of cable jaws to retain a length of a thermoplastic cable material;
a piston, the piston configured to secure an overlapping segment of the thermoplastic cable material at a weld area;
an induction coil to apply an electromagnetic field; and
a power supply.

2. The system of claim 1, further comprising a tensioning motor and a tensioning track, the tensioning motor and the tensioning track configured to tighten the length of the thermoplastic cable material around at least one elongate member being bundled, and wherein the length of thermoplastic cable material is fed through the dispensing track of the pair of cable jaws around the at least one elongate member until an end of the thermoplastic cable material overlaps an intermediate segment of the thermoplastic cable material at a weld area, the tensioning motor tightens the thermoplastic cable material around the at least one elongate member being bundled, and the overlapping segment of the thermoplastic cable material is bonded by the electromagnetic field of the induction coil.

3. The system of claim 2, wherein the body further comprises:
a retaining member to retain a length of the cable material, the retaining member configured to yield a length of cable material based on a drawing force;
a receptacle to retain the retaining member; and
a dispensing mechanism, the dispensing mechanism disposed at the receptacle and configured to dispense a determined length of cable material around the at least one elongate member being bundled;
wherein the dispensing mechanism is removably connected to the body.

4. The system of claim 3, wherein the retaining member is rotatably connected to the receptacle of the body.

5. The system of one of claims 2 to 4, wherein the body further comprises an electromagnetically non-conductive shield to insulate the at least one elongate member being bundled from the induction coil.

6. The system of one of the preceding claims, wherein the body further comprises a metallic or ferromagnetic insert sensitive to the electromagnetic field positioned at the weld area.

7. The system of claim 6, wherein the metallic or ferromagnetic insert is a clamp, the clamp being configured to hold the overlapping segment of the thermoplastic cable material in place and heated by the induction coil to bond the overlapping segment of the thermoplastic cable material.

8. The system of claim 6 or 7, wherein the metallic or ferromagnetic insert is a staple, and wherein the staple is accelerated through the overlapping segments of the thermoplastic cable material and heated by the induction coil to bond the overlapping segment of the thermoplastic cable material.

9. The system of one of claims 6 to 8, wherein the metallic or ferromagnetic insert is positioned at the overlapping segments of the thermoplastic cable material at the weld area, between a first segment and a second segment of the thermoplastic cable material.

10. The system of claim 9, wherein the metallic or ferromagnetic insert is a mesh, and wherein the mesh is disposed between the first segment and second segment of thermoplastic cable material and heated by the induction coil to bond the first segment of thermoplastic cable material to the second segment of thermoplastic cable material.

11. The system of claim 9 or 10, wherein the metallic or ferromagnetic insert is a foil sheet, the foil sheet is disposed between the first segment and the second segment of thermoplastic cable material and heated by the induction coil to bond the first segment of thermoplastic cable material to the second segment of thermoplastic cable material.

12. The system of one of claims 9 to 11, wherein the thermoplastic cable material further comprises a metallic or ferromagnetic layer disposed between adjacent layers of thermoplastic cable material and wherein overlapping segments of the thermoplastic cable material is configured to bond when a magnetic field frequency is applied from the induction coil to the weld area.

13. The system of one of the preceding claims, wherein the power supply operates at a frequency of 10 kHz to 10 MHz.

14. The system of one of the preceding claims, wherein the induction coil is a hair-pin induction coil, a stacked spiral wire coil, or a spiral-cut sheet coil.

15. A method, comprising:
dispensing a segment of a thermoplastic cable material through a pair of cable jaws along a dispensing track of a pair of cable jaws until a first segment of a thermoplastic cable material overlaps a second segment of the thermoplastic cable material at an area by a piston, the piston being formed by an induction coil;
tensioning the thermoplastic cable material to tighten the thermoplastic cable material around at least one elongate member being bundled;
applying the piston onto the overlapping first segment and the second segment of the thermoplastic cable material to apply pressure to the first segment and the second segment of the thermoplastic cable material;
generating an electromagnetic field with a power supply; and
applying the electromagnetic field through the induction coil to bond the first segment of the thermoplastic cable material to the second segment of the thermoplastic cable material.

16. The method of claim 15, wherein dispensing a segment of the thermoplastic cable material further comprises:
positioning an insert between the first segment and second segment of the thermoplastic cable material.

17. The method of claim 15 or 16, wherein dispensing a segment of the thermoplastic cable material further comprises:
positioning an insert around the first segment and the second segment of the thermoplastic cable material.

18. A cable material welding tool, comprising:
a pair of cable jaws;
an induction coil,
wherein the induction coil is a pin-hair coil, a spiral wire coil, a stacked spiral wire coil, or a spiral-cut sheet coil;
a length of cable material;
a shield to insulate at least one elongate member being bundled from an electromagnetic field generated by the induction coil; and
a power supply that operates between 10 kHz and 10 MHz.

19. The cable material welding tool of claim 18, wherein the cable material welding tool further comprises:
a piston;
a tensioning motor and a tensioning track; and
an electrically non-conductive shield.

20. The cable material welding tool of claim 18 or 19, wherein the cable material further comprises a metallic or ferromagnetic layer disposed between adjacent layers of thermoplastic and wherein an overlapping segment of the cable material is configured to bond together when heat is applied from the induction coil.
